# FASCICULE DE BREVET EUROPEEN

(11) **EP 3 907 479 B1**
(45) Date de publication et mention de la délivrance du brevet: **30.11.2022**
(21) Numéro de dépôt: 21172404.2
(22) Date de dépôt: 06.05.2021
(51) Int. Cl.: G01D 11/24, G01P 5/00

(54) **DISPOSITIF DE MESURE ET SON PROCÉDÉ DE FABRICATION**
MESSGERÄT UND SEIN HERSTELLUNGSVERFAHREN
MEASURING DEVICE AND ITS MANUFACTURING PROCESS

(30) Priorité: 06.05.2020 FR 2004507
(43) Date de publication de la demande: 10.11.2021
(73) Titulaire: NW Technology, 30820 Caveirac (FR)
(72) Inventeur: HARDY, François, 30820 CAVEIRAC (FR)
(74) Mandataire: Roman, Alexis

(56) Documents cités:
- EP-B1- 2 504 667
- DE-A1-102008 035 423
- US-A1- 2016 320 216
- US-A1- 2017 106 585

## Description

### Domaine technique.

L'invention a pour objets un dispositif de mesure et son procédé de fabrication. L'invention a également pour objet un procédé de mesure d'une grandeur physique pariétale utilisant un tel dispositif de mesure.

L'invention se rapporte au domaine technique des dispositifs de mesure se présentant sous la forme d'une bande préférentiellement flexible intégrant des capteurs de mesure d'une ou plusieurs grandeurs physiques pariétales, telles que la pression, la température, le frottement, ou le bruit, utilisés notamment pour caractériser l'écoulement d'un fluide sur une surface, par exemple la surface d'un aéronef, d'un véhicule terrestre ou marin, d'une voile, d'une pâle, etc.

### Etat de la technique.

Des dispositifs du type précité sont connus de l'art antérieur et notamment décrits dans les documents brevets FR2749656, US6134485, US7350752 ou encore EP2504667. De faibles épaisseurs, ces dispositifs se présentant sous forme de bande flexible, épousent la forme des surfaces à étudier, en perturbant le moins possible les écoulements, de sorte que l'on obtient des mesures extrêmement précises.

Toutefois, les procédés de fabrication sont relativement complexes, et de fait longs et coûteux en temps et en main-d'œuvre. Aussi, les prix de ces dispositifs de mesure sont généralement élevés.

L'invention vise à résoudre cet état des choses. Un autre objectif de l'invention est de proposer un procédé de fabrication d'un dispositif de mesure du type précité, qui soit simple à mettre en œuvre et d'un prix de revient réduit.

Encore un autre objectif de l'invention est de proposer un procédé de fabrication qui puisse être facilement automatisé, et qui offre une bonne précision de fabrication.

Un objectif supplémentaire de l'invention est de proposer un procédé de fabrication qui offre de nombreuses possibilités de modifications de la forme et/ou du profil de la bande de capteurs.

### Présentation de l'invention.

La solution proposée par l'invention est un procédé de fabrication d'un dispositif de mesure se présentant sous la forme d'une bande intégrant des capteurs de mesure d'une ou plusieurs grandeurs physiques pariétales, ledit procédé comprenant une étape consistant à utiliser des capteurs présentant une zone active pour la prise de mesure,
le procédé comprenant les étapes remarquables consistant à :
- réaliser, par impression 3D d'un matériau thermoplastique, un support allongé comprenant une rainure longitudinale, laquelle rainure présente une paroi de fond,
- installer les capteurs dans la rainure, l'installation étant réalisée de sorte que les zones actives desdits capteurs soient situées à l'opposé de la paroi de fond,
- encapsuler les capteurs dans la rainure, au moyen d'un matériau thermoplastique ajouté par impression 3D,
- ménager des ouvertures dans l'encapsulation, au niveau de chaque zone active, de manière à laisser libres lesdites zones.

La mise en œuvre d'une impression 3D pour réaliser le support allongé et l'encapsulation, permet de fabriquer la bande de capteurs de façon très simple et rapide. Cette technique de fabrication ne nécessite pas d'outils ni de moules complexes, mais une simple imprimante 3D, de sorte que le prix de revient du dispositif de mesure est particulièrement réduit.

De plus, l'impression 3D offre une bonne précision de fabrication dans la mesure où l'épaisseur des couches de matériau ajouté est relativement réduite, de l'ordre de 0,1 mm à 0,3 mm. On obtient ainsi des bandes de capteurs très fines, avec des profils de géométrie précis, et présentant un état de surface externe lisse qui ne perturbent pas de manière significative l'écoulement de fluide. Également, ce procédé de fabrication permet d'obtenir une encapsulation de qualité (sans bulle) des composants, ce qui, étant donné le rapport entre la longueur et la finesse des bandes de capteurs, est généralement difficile à obtenir avec un mode de fabrication par coulée.

En outre, les imprimantes 3D pouvant être aisément programmées, le procédé de fabrication peut être facilement automatisé, avec peu ou pas de main-d'œuvre. La programmation de ces imprimantes 3D permet de moduler la forme et/ou le profil de la bande de capteurs pour s'adapter de manière très précise à la surface à instrumenter. Le procédé de fabrication offre donc la possibilité de produire en série des bandes de capteurs identiques, ou des bandes de capteurs spécifiques réalisées « sur mesure », sans la nécessité d'investir dans un coûteux moule de coulée, pour chacune des bandes de capteurs.

D'autres caractéristiques avantageuses du procédé selon l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Aussi, ces autres caractéristiques peuvent faire l'objet, le cas échéant, d'une ou plusieurs demandes de brevet divisionnaires :
- Selon un mode de réalisation, le procédé comprend une étape consistant à ménager les ouvertures pendant l'impression 3D de l'encapsulation (92).
- Selon un mode de réalisation, le procédé comprend les étapes consistant à réaliser l'encapsulation des capteurs de manière à recouvrir leur zone active ou plusieurs couches de matériau thermoplastique, et ménager les ouvertures, par enlèvement ou retrait de matière recouvrant les zones actives.
- Selon un mode de réalisation, le procédé comprend les étapes suivantes : - protéger chaque zone active par un élément de protection amovible, laquelle étape est réalisée avant l'encapsulation des capteurs ; - après l'encapsulation des capteurs, retirer les éléments de protection amovible de sorte que les empreintes laissées dans l'encapsulation par lesdits éléments de protection forment les ouvertures.
- Selon un mode de réalisation, le procédé comprend une étape consistant à utiliser le même matériau thermoplastique pour l'impression 3D du support et pour l'impression 3D de l'encapsulation.
- Selon un mode de réalisation, le procédé comprend une étape consistant à utiliser un premier matériau thermoplastique pour l'impression 3D du support et un second matériau thermoplastique pour l'impression 3D de l'encapsulation, le second matériau ayant une température de fusion équivalente ou sensiblement équivalente à celle du premier matériau pour permettre une fusion superficielle dudit support lors de l'impression 3D de ladite encapsulation.
- Selon un mode de réalisation, le procédé comprend les étapes consistant à : - fixer chaque capteur sur une carte de circuit imprimé ; - aménager au moins un premier détrompeur sur chaque carte de circuit imprimé ; - aménager de seconds détrompeurs dans la rainure, lesquels seconds détrompeurs sont configurés pour coopérer avec les premiers détrompeurs pour assurer le positionnement des capteurs dans ladite rainure. Ou on utilise la largeur de la carte comme détrompeur.

Un autre aspect de l'invention concerne un dispositif de mesure se présentant sous la forme d'une bande intégrant des capteurs de mesure d'une ou plusieurs grandeurs physiques pariétales, lesdits capteurs présentant une zone active pour la prise de mesure,
- le dispositif de mesure comprend un support allongé réalisé dans un matériau thermoplastique, lequel support est susceptible d'être obtenu par impression 3D dudit matériau, lequel support comprend une rainure longitudinale présentant une paroi de fond,
- les capteurs sont installés dans la rainure sorte que les zones actives desdits capteurs soient situées à l'opposé de la paroi de fond,
- les capteurs sont encapsulés dans la rainure, au moyen d'un matériau thermoplastique, lequel matériau est susceptible d'être ajouté par impression 3D,
- des ouvertures sont ménagées dans l'encapsulation, au niveau de chaque zone active des capteurs, de sorte que lesdites zones sont laissées libres.

D'autres caractéristiques avantageuses du dispositif de mesure selon l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Aussi, ces autres caractéristiques peuvent faire l'objet, le cas échéant, d'une ou plusieurs demandes de brevet divisionnaires :
- Selon un mode de réalisation, chaque capteur est connecté à une unité de gestion électronique respective, chaque unité de gestion électronique étant adaptée pour assurer au moins l'une des fonctions suivantes : réguler une tension d'alimentation du capteur respectif ; amplifier un signal de mesure du capteur respectif ; adresser le capteur respectif ; numériser les signaux de mesure générés par le capteur respectif.
- Selon un mode de réalisation : - chaque unité de gestion électronique se présente sous la forme d'une carte d'interface ; - chaque capteur est fixé sur une carte de circuit imprimé qui est distincte de la carte d'interface associée audit capteur ; - chaque carte de circuit imprimé est connectée à une carte d'interface respective au moyen d'une liaison électrique souple ; - le dispositif présente, installée dans la rainure, une succession de cartes de circuit imprimé et de cartes d'interface, connectées par des liaisons électriques souples.
- Selon un mode de réalisation, les liaisons électriques souples sont des bus I2C.
- Selon un mode de réalisation, les capteurs sont installés sur des portions de circuit rigides d'un circuit imprimé flex-rigide.
- Selon un mode de réalisation, les capteurs sont fixés sur une carte de circuit imprimé commune, laquelle carte est flexible ou rigide.
- Selon un mode de réalisation, les capteurs et les unités de gestion électronique sont fixés sur une carte de circuit imprimé commune, laquelle carte est flexible ou rigide.
- Selon un mode de réalisation, les capteurs sont des micro-capteurs MEMS.
- Selon un mode de réalisation, la bande flexible intègre au moins un module de communication sans fil adapté pour recevoir les signaux de mesures générés par les capteurs et transmettre lesdits signaux au travers d'une liaison sans fil de courte portée.
- Selon un mode de réalisation, chaque capteur est associé à un module de communication sans fil qui lui est propre, lesdits capteurs étant agencés en réseau de manière à communiquer pour véhiculer leurs signaux de mesure entre eux.
- Selon un mode de réalisation, le dispositif comporte une unité d'alimentation électrique autonome, laquelle unité est adaptée pour alimenter ledit dispositif de mesure.
- Selon un mode de réalisation, l'unité d'alimentation comporte au moins l'un des éléments suivants : - un ou plusieurs films photovoltaïques flexibles ; - une ou plusieurs batteries électriques ; - un module de communication sans fil adapté pour recevoir les signaux de mesures générés par les capteurs et transmettre lesdits signaux à une unité de traitement, via une liaison sans fil de courte portée.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] illustre une surface sur laquelle sont installés plusieurs dispositifs de mesure selon l'invention.
[Fig. 2] schématise une coupe longitudinale d'un dispositif de mesure objet de l'invention, selon un premier mode de réalisation.
[Fig. 3] schématise une coupe longitudinale d'un dispositif de mesure objet de l'invention, selon un second mode de réalisation.
[Fig. 4] schématise une unité de traitement adaptée pour se connecter au dispositif de mesure objet de l'invention.
[Fig. 5] schématise une unité d'alimentation autonome et/ou de communication adaptée pour se connecter au dispositif de mesure objet de l'invention.
[Fig. 6] schématise un capteur de mesure susceptible d'être utilisé dans un dispositif de mesure objet de l'invention.
[Fig. 7] illustre une première étape d'un procédé de fabrication selon l'invention.
[Fig. 8] illustre une seconde étape d'un procédé de fabrication selon un premier mode de réalisation de l'invention.
[Fig. 9] illustre une troisième étape d'un procédé de fabrication selon le premier mode de réalisation de l'invention.
[Fig. 10] illustre une quatrième étape d'un procédé de fabrication selon le premier mode de réalisation de l'invention.
[Fig. 11] illustre une seconde étape d'un procédé de fabrication selon un second mode de réalisation de l'invention.
[Fig. 12] illustre une troisième étape d'un procédé de fabrication selon le second mode de réalisation de l'invention.
[Fig. 13] illustre une quatrième étape d'un procédé de fabrication selon le second mode de réalisation de l'invention.
[Fig. 14] est une vue agrandie du détail D de la figure 9.
[Fig. 15] est un autre exemple de profil du dispositif de mesure susceptible d'être obtenu avec un procédé conforme à l'invention.

### Description des modes de réalisation.

Par souci de clarté, les précisions suivantes sont apportées à certains termes utilisés dans la description et les revendications :
- « X et/ou Y » signifie : X seul ou Y seul ou X+Y.
- sauf indication contraire, l'utilisation des adjectifs ordinaux «*premier*», «*second*», etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.
- De même, l'utilisation des adjectifs « proximal(e)/distal(e) », « supérieur(e)/inférieur(e) », droite/gauche », « avant/arrière » etc., permet de décrire simplement la position d'un objet dans la configuration des figures annexées, mais n'implique pas, qu'en pratique, des objets similaires soient dans la même position.
- D'une manière générale, on appréciera que les différents dessins ne sont pas dessinés à l'échelle d'une figure à l'autre ni à l'intérieur d'une figure donnée, et notamment que les épaisseurs de couche sont arbitrairement dessinées pour faciliter la lecture des dessins.

### Dispositif de mesure

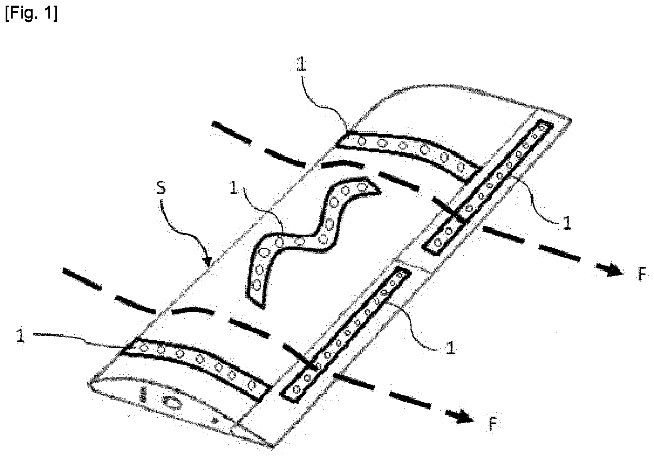

En se rapportant à la figure 1, le dispositif de mesure objet de l'invention se présente sous la forme d'une bande 1 qui peut être rectiligne ou non rectiligne, par exemple présentée une ou plusieurs portions courbées ou en ligne brisée.

Selon un mode préféré de réalisation, la bande 1 est flexible ou souple, les deux adjectifs étant des synonymes selon la présente invention. La bande 1 peut ainsi être aisément être pliée ou courbée pour s'adapter à la forme de la surface S à instrumenter, laquelle surface peut être plane, convexe, concave, ondulée, en lignes brisées, etc. La suite de la description fait essentiellement référence à une bande flexible. Toutefois, pour des applications spécifiques, par exemple lorsque la surface S est plane, la bande 1 peut être rigide.

Sur la figure 1, la surface instrumentée S est une portion d'aile d'avion. Il pourrait toutefois s'agir d'une autre surface d'un aéronef, d'une surface d'un véhicule terrestre (par exemple un pare-brise de voiture, un aileron de formule 1, un profil de vélo ou de moto), d'une surface d'un véhicule marin (par exemple la coque d'un bateau), d'une voile de bateau, d'une pâle d'éolienne, d'aéronef ou de moteur marin, etc. Le fluide peut être un gaz tel que de l'air, un liquide tel que de l'eau, ou un mélange gaz/liquide.

Sur la figure 1, plusieurs bandes 1 sont fixées sur la surface S, certaines étant disposées selon le sens de l'écoulement, parallèlement aux filets F de fluide. D'autres sont disposées perpendiculairement aux filets F de fluide. Le nombre de bandes1 et leur agencement sur la surface S dépend notamment des dimensions de cette dernière et/ou des caractéristiques à analyser de l'écoulement.

La bande 1 est mince, en ce sens que son épaisseur est très réduite par rapport à sa surface et/ou sa longueur, de sorte qu'elle perturbe le moins possible - ou de manière négligeable - l'écoulement F de fluide sur la surface S. Selon un mode préféré de réalisation, la bande 1 a une épaisseur comprise entre 1 mm et 5 mm, pour une largeur comprise entre 8 mm et 12 mm pour des mesures en condition simulée (ex : en soufflerie) et entre 15 mm et 20 mm pour des mesures en conditions réelles. Sa longueur varie par exemple de 10 cm à 3 m en fonction des dimensions des surfaces à instrumenter.

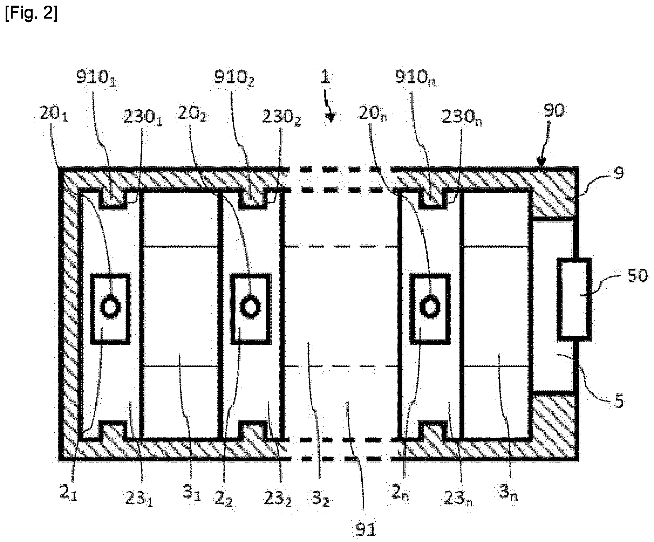

Sur la figure 2, la bande 1 intègre plusieurs capteurs 2₁-2ₙ adaptés pour la mesure d'une ou plusieurs grandeurs physiques pariétales. La bande 1 peut présenter de 2 à 100 capteurs 2₁-2ₙ en fonction des dimensions des surfaces à instrumenter. Il peut s'agir de capteurs de pression, de bruit, de vibration, de température, d'accélération, d'humidité, de frottement, etc. Les grandeurs mesurées permettent de caractériser l'écoulement F du fluide sur la surface S. Elles permettent par exemple de caractériser un profil aérodynamique en quantifiant les variations de pression et/ou de température et/ou de bruit, du flux d'air parcourant la surface S de l'intrados et de l'extrados du profil testé. Une cartographie des grandeurs physiques pariétales mesurées permet également de vérifier les propriétés aérodynamiques du profil et d'identifier précisément les zones et les conditions d'apparition de micro-turbulences pouvant conduire à un décrochage, à une diminution de performance, à une surconsommation de carburant, a du bruit, etc. La cartographie des grandeurs mesurées permet encore de détecter un décollement de couche limite, notamment par analyse de la composante acoustique des fluctuations de pression pariétales. Chaque capteur 2₁-2ₙ peut être adapté pour mesurer une seule ou plusieurs grandeurs physiques pariétales, par exemple une pression et une température.

Selon un mode de réalisation, les capteurs 2₁-2ₙ sont des micro-capteurs MEMS (pour l'acronyme anglais Micro-Electro-Mechanical-Systems). Ces capteurs sont par nature très compacts (leur taille est de l'ordre du millimètre carré), de sorte qu'ils contribuent à réduire l'épaisseur de la bande 1. En outre, ce type de capteur est relativement bon marché, car conçus pour des marchés de masse, sont souvent étanches, ont une faible consommation, et sont précis. Ils possèdent une partie mobile sensible à la variation de la grandeur physique mesurée (pression, température, bruit, accélération, ...). Cette variation est traduite en un signal électrique - ou signal de mesure.

Ces capteurs sont connectés entre eux, en série ou en parallèle, par des liaisons électriques souples, ou par des liaisons sans fils, notamment selon les modalités expliquées plus avant dans la description.

Les capteurs 2₁-2ₙ présentent chacun une zone active 20₁-20ₙ pour la prise de mesure. Dans le cas d'un capteur MEMS, cette zone active communique directement avec la partie mobile sensible à la variation de la grandeur physique mesurée, ou correspond à cette partie mobile.

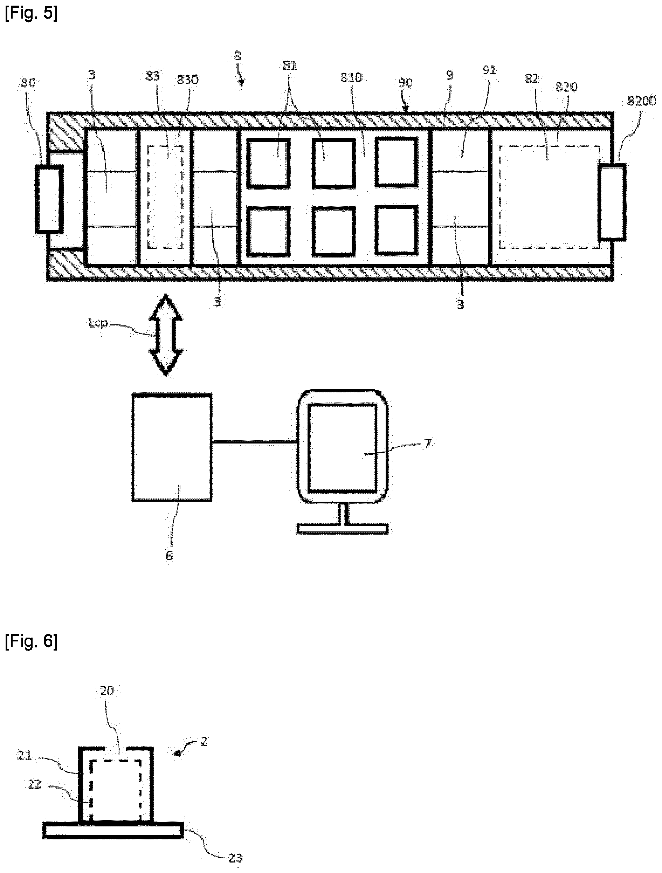

Selon un mode de réalisation illustré notamment sur la figure 6, chaque capteur 2 présente une enveloppe de protection 21 à l'intérieur de laquelle est conditionné l'élément actif 22 dudit capteur. Cette enveloppe 21 est par exemple réalisée en métal et peut avoir une forme cylindrique, de pavé, etc. L'enveloppe 21 est pourvue d'un orifice 20 pour la prise de mesure, lequel orifice débouche sur sa face supérieure. Dans la suite de la description, cet orifice 20, 20₁-20ₙ est ici considéré comme la zone active du capteur 2, 2₁-2ₙ. Son diamètre est petit, de l'ordre du millimètre.

Sur les figures annexées, chaque capteur 2, 2₁-2ₙ est fixé sur une carte de circuit imprimé 23, 23₁-23ₙ, notamment par soudage. Cette carte comprend notamment une ou plusieurs pistes pour l'alimentation électrique du capteur et une ou plusieurs pistes pour véhiculer le signal de mesure généré par ledit capteur. A titre d'exemple, cette carte a une épaisseur comprise entre 20 µm et 3 mm, une largeur comprise entre 3 mm et 10 mm et une longueur comprise entre 5 mm et 15 mm.

Sur la figure 1, les cartes 23₁-23ₙ (et de fait les capteurs 2₁-2ₙ) sont connectées entre-elles par des liaisons électriques souples 3₁-3ₙ. La bande 1 présente ainsi une succession de cartes de circuit imprimé 23₁-23ₙ connectées par des liaisons électriques souples3₁-3ₙ.

Ces liaisons électriques 3₁-3ₙ sont adaptées pour alimenter électriquement chaque carte et/ou pour véhiculer les signaux de mesures générés par lesdits capteurs. Selon un mode de réalisation, ces liaisons électriques souples 3₁-3ₙ sont des bus I2C (pour l'acronyme anglais Inter Integrated Circuit). Ce type de bus permet de faire communiquer entre eux les capteurs 2₁-2ₙ avec seulement trois fils : un signal de donnée, un signal d'horloge, et un signal de référence électrique (Masse). On optimise ainsi le nombre de liaisons dans la bande 1, ce qui de fait simplifie la conception et réduit les coûts de fabrication. En outre, avec de tels bus, les données des signaux de mesures peuvent être transmises très rapidement, avec un débit pouvant aller jusqu'à 3Mbits/s.

Selon un mode de réalisation, chaque carte 23, 23₁-23ₙ est flexible. Elles se présentent par exemple chacune sous la forme d'un film mince ayant une épaisseur comprise entre 20 µm et 250 µm. Les cartes 23, 23₁-23ₙ peuvent être réalisé dans un matériau choisi dans le groupe suivant : polyimide (par ex : Kapton^{®}), polyépoxyde, polyester, résine époxy renforcée de fibre de verre, substrat d'aluminium. Tout autre matériau généralement utilisé pour la fabrication de circuit imprimé souple peut toutefois être envisagé. Ces cartes 23, 23₁-23ₙ flexibles sont connectées entre elles par les liaisons électriques souples 3₁-3ₙ précitées.

Selon un autre mode de réalisation, les cartes 23, 23₁-23ₙ et les liaisons électriques souples 3₁-3ₙ forment un circuit imprimé flex-rigide. Ce type de circuit flex-rigide, ou semi-flexible, comprend des portions de circuit rigides - les cartes 23, 23₁-23ₙ - et d'autres portions de circuit flexibles - les liaisons électriques souples 3₁-3ₙ. Les circuits flexibles sont le prolongement, à partir d'un support, des couches de circuit imprimé des circuits rigides. Cette conception présente l'avantage de s'affranchir de l'utilisation de liaisons électriques filaires pour relier les cartes 23, 23₁-23ₙ, ce qui simplifie la conception de la bande 1 et contribue à en réduire les coûts et l'encombrement. Elle permet en outre d'obtenir, de façon automatisée, des circuits de grande longueur.

Selon une variante de réalisation, les capteurs 2₁-2ₙ sont connectés sur une seule carte commune flexible de sorte qu'il n'est pas besoin de prévoir les liaisons électriques souples 3₁-3ₙ. Cette carte flexible commune se présente avantageusement sous la forme d'un film mince de 20 µm et 250 µm d'épaisseur, réalisée dans un matériau généralement utilisé pour la fabrication de circuit imprimé souple tel que : polyimide, polyépoxyde, polyester, résine époxy renforcée de fibre de verre, substrat d'aluminium.

Selon une autre variante de réalisation, les capteurs 2₁-2ₙ sont connectés sur une seule carte commune rigide. Cette conception peut notamment être envisagée dans le cas où une flexibilité de la bande 1 n'est pas recherchée.

Selon un mode de réalisation, une extrémité de la bande 1 comporte un connecteur 5 formant un point d'entrée/sortie électrique. C'est par ce connecteur 5 qu'est assurée l'alimentation électrique des composants de la bande 1 (notamment les capteurs 2₁-2ₙ) et que les signaux de mesure sortent de ladite bande. Ce connecteur 5 peut présenter une face de connexion 50 qui débouche sur le bord de la bande 1 et qui permet de connecter le dispositif de mesure à une alimentation électrique et/ou ou à un dispositif de traitement des signaux de mesure, comme expliqué plus avant dans la description. Sur la figure 2, ce connecteur 5 est connecté au capteur proximal 2ₙ de la bande 1, et plus particulièrement à sa carte 20ₙ, au moyen d'une liaison électrique souple 3ₙ du type décrit précédemment. Selon un autre mode de réalisation, le connecteur 5 est directement fixé sur la carte 20ₙ du capteur proximal 2ₙ de la bande 1. Selon encore un autre mode de réalisation, le connecteur 5 est fixé sur une carte de circuit imprimé commune flexible sur laquelle sont fixés les capteurs 2₁-2ₙ. Selon encore un autre mode de réalisation, le connecteur 5 est fixé sur une portion de circuit rigide d'un circuit imprimé flex-rigide. Selon encore un autre mode de réalisation, la bande 1 ne comporte pas de connecteur 5 dont la face de connexion 50 débouchant sur le bord de ladite bande.

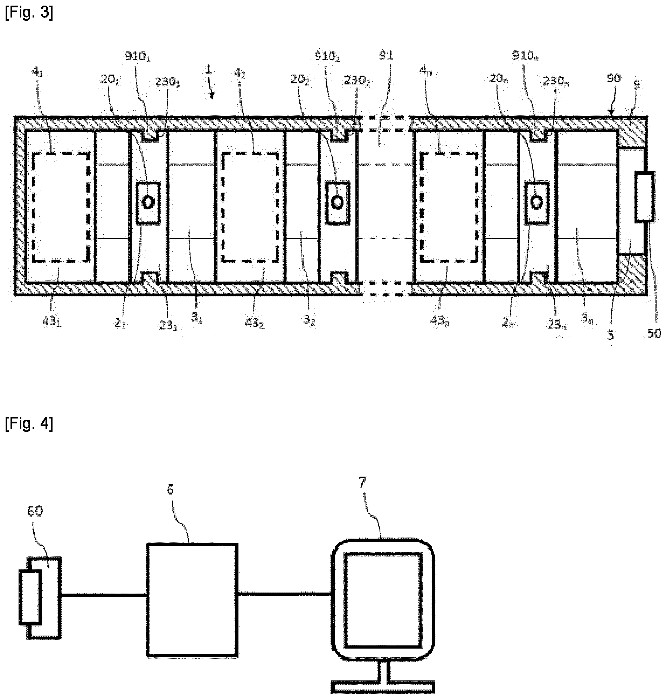

Sur la figure 3, la bande 1 intègre en outre des unités de gestion électronique 4₁-4ₙ auxquelles sont connectés respectivement chaque capteur 2₁-2ₙ. Chaque unité de gestion 4₁-4ₙ comprend un processeur, microprocesseurs, FPGA (pour l'acronyme anglais Field Programmable Gate Arrays) ou CPU (pour l'acronyme anglais Central Processing Unit) éventuellement combiné à un ou plusieurs autres composants électroniques. L'ensemble est fixé sur une carte de circuit imprimé 43₁-43ₙ pour former une carte d'interface.

Chaque unité de gestion électronique 4₁-4ₙ est adaptée pour réguler la tension d'alimentation du capteur respectif et/ou amplifier le signal de mesure du capteur respectif et/ou adresser le capteur respectif et/ou numériser les signaux de mesure générés par le capteur respectif. En effet, la longueur de la bande 1 pouvant être importante, il peut être nécessaire de l'alimenter avec une tension (par exemple 24 Volts ou 12 Volts) qui est supérieure à la tension d'alimentation des capteurs 2₁-2ₙ (par exemple 5 Volts ou 1,5 Volts). Chaque unité de gestion électronique 4₁-4ₙ comprend alors un régulateur-abaisseur de tension pour que le capteur 2₁-2ₙ respectif soit alimenté avec la tension adéquate. De même, pour transporter les signaux de mesure sur de grandes longueurs, il peut être nécessaire d'augmenter leur puissance. Pour cela, chaque unité de gestion électronique 4₁-4ₙ comprend un amplificateur - ou buffer électronique - adapté pour amplifier la puissance du signal de mesure généré par le capteur respectif 2₁-2ₙ. En outre, pour obtenir une cartographie précise des grandeurs physiques pariétales mesurées et/ou pour traiter lesdits signaux, il convient de distinguer les signaux de mesure générés par chaque capteur 2₁-2ₙ. Ces derniers pouvant être des composants standards, ils peuvent ne pas disposer d'une adresse spécifique unique. Chaque unité de gestion électronique 4₁-4ₙ peut alors comprendre un processeur, un microprocesseur ou un autre composant, adapté pour affecter une translation d'adresse entre ledit processeur, ledit microprocesseur ou ledit autre composant et le capteur respectif 2₁-2ₙ. De plus, lorsque les signaux de mesure générés par les capteurs 2₁-2ₙ sont des signaux analogiques, il peut être nécessaire de les convertir en signaux numériques. Chaque unité de gestion électronique 4₁-4ₙ peut alors comprendre un convertisseur analogique/numérique.

Sur la figure 3, chaque unité de gestion 4₁-4ₙ est fixée sur une carte de circuit imprimé 43₁-43ₙ pour former une carte d'interface. Selon un mode de réalisation, les cartes de circuit imprimé 23₁-23ₙ et les cartes d'interface 43₁-43ₙ sont distinctes pour éviter d'avoir une carte unique rigide trop large. La bande 1 présente ainsi une succession de cartes de circuit imprimé 23₁-23ₙ et de cartes d'interface 43₁-43ₙ, connectées par des liaisons électriques souples 3₁-3ₙ décrites précédemment en référence au mode de réalisation de la figure 2.

Selon un mode de réalisation, les cartes de circuit imprimé 23₁-23ₙ, les cartes d'interface 43₁-43ₙ et les liaisons électriques souples 3₁-3ₙ forment un circuit imprimé flex-rigide. Les cartes de circuit imprimé 23₁-23ₙ et les cartes d'interface 43₁-43ₙ sont les portions de circuit rigides et les liaisons électriques souples 3₁-3ₙ sont les portions de circuit flexibles.

Selon un autre mode de réalisation, chaque carte 23₁-23ₙ et 43₁-43ₙ est flexible, du type réalisé dans un matériau tel que : polyimide, polyépoxyde, polyester, résine époxy renforcée de fibre de verre, substrat d'aluminium, ou tout autre matériau généralement utilisé pour la fabrication de circuit imprimé souple.

Selon une variante de réalisation, les capteurs 2₁-2ₙ et les unités de gestion 4₁-4ₙ sont connectés sur une seule carte commune flexible ou rigide de sorte qu'il n'est pas besoin de prévoir les liaisons électriques souples 3₁-3ₙ. Une carte flexible commune est du type précité.

Le dispositif objet de l'invention peut être utilisé pour des mesures en conditions simulées, par exemple en soufflerie à échelle réduite, ou en conditions réelles.

Pour des mesures en conditions simulées, la surface S instrumentée d'une ou plusieurs bandes 1, est par exemple installée en soufflerie ou installée dans un bassin ou tunnel hydrodynamique. La bande 1 peut être connectée via, son connecteur 5, à une alimentation externe et à une unité de traitement 6. Sur la figure 4, cette alimentation est assurée par une unité de traitement 6, pourvu d'un connecteur 60 adapté pour se connecter au connecteur 5. On peut également prévoir de relier directement la bande 1 à l'unité de traitement 6 par un connecteur intégré dans la bande 1 et qui ressort de ladite bande. Cette unité de traitement 6 consiste par exemple en un ordinateur fixe ou portable installé à proximité du banc de test où sont réalisés les essais en soufflerie. Les signaux de mesures générés par les capteurs 2₁-2ₙ, sont ici transmis par voie filaire à l'unité de traitement 6, au travers des connecteurs 5 et 60. Ces signaux sont ensuite traités par l'unité de traitement 6 qui dispose des ressources matérielles et logiciels adaptées pour cela. Ce traitement permet de caractériser l'écoulement du fluide sur la surface S, par exemple pour vérifier les propriétés aérodynamiques du profil, identifier des zones de micro-turbulences et leurs conditions d'apparition, détecter un décollement de couche limite, etc. Les résultats peuvent être affichés sur un écran d'affichage 7 connecté à l'unité de traitement 6, pour pouvoir être interprétés par un opérateur.

Pour des mesures en conditions réelles, il est avantageux que le dispositif de mesure dispose d'une alimentation autonome. La figure 5 illustre une unité d'alimentation électrique autonome 8 adaptée pour se connecter à la bande 1.

L'unité 8 comporte un ou plusieurs panneaux solaires 81 se présentant sous la forme de film(s) photovoltaïque(s) flexible(s). On peut par exemple utiliser des films ASCA^{®} commercialisés par la société ARMOR^{®}. A titre d'exemple, le film photovoltaïque 81 a une épaisseur comprise entre 20 µm et 0,5 mm, une largeur comprise entre 5 mm et 15 mm et une longueur comprise entre 5 cm et 15 cm. Le ou les panneaux solaires 81 peuvent être associés à un régulateur de tension, adapté pour ajuster la tension d'alimentation de la bande 1.

L'unité 8 comprend également une ou plusieurs batteries électriques flexibles 82. On peut par exemple utiliser une ou plusieurs batteries flexibles commercialisées par la société Shenzhen Honghaosheng Electronics Co., Ltd, sous la référence HHS^{®}. Plusieurs batteries peuvent être combinées ensemble (ex : empilées en série) pour obtenir la tension d'alimentation voulue. A titre d'exemple, la batterie électrique flexible 82 (ou l'ensemble de batteries) a une épaisseur comprise entre 20 µm et 1 mm, une largeur comprise entre 5 mm et 15 mm et une longueur comprise entre 3 cm et 10 cm. Le ou les batteries 82 peuvent être associées à un régulateur de tension, adapté pour ajuster la tension d'alimentation de la bande 1. Un connecteur 8200, par exemple un connecteur USB, peut être prévu pour recharger le(s) batterie(s) 82. Le cas échéant, les batteries 82 sont rechargées au moyen des panneaux solaires 81.

L'unité 8 peut encore comprendre un module de communication sans fil 83 adapté pour recevoir les signaux de mesures générés par les capteurs 2₁-2ₙ et les transmettre à l'unité de traitement 6 précitée, via une liaison sans fil de courte portée Lcp. Selon un mode préféré de réalisation, le module de communication 83 est un module Bluetooth^{®} qui permet la réalisation d'un réseau dense de capteurs 2₁-2ₙ, avec une basse consommation. Toutefois, le module de communication 83 peut utiliser d'autres protocoles de communication tels que Zigbee^{®}, Wifi^{®}, ANT, Infrarouge, etc. Le dispositif de mesure est ainsi adapté pour émettre les signaux de mesure dans une zone d'émission comprise entre 20 m et 500 m, la portée dépendant en partie de la puissance du module 83 et/ou de l'orientation d'une ou plusieurs antennes directionnelles associées audit module. Aussi, et à titre d'exemple, si une bande 1 est fixée sur la voile d'un bateau ou sur une aile d'avion, l'unité de traitement 6 peut être déportée dans une cabine de pilotage, sans qu'il soit nécessaire de prévoir une connexion filaire antre ladite unité et ladite bande.

Selon un mode de réalisation, le ou les panneaux solaires 81, la ou les batteries électriques 82, et le module de communication sans fil 83 sont chacun fixés sur une carte de circuit imprimé respectivement référencées 810, 820 et 830 sur la figure 5. Ces cartes sont reliées entre elles par des liaisons électriques souples 3 du type précité. Ces cartes 810, 820, 830 sont préférentiellement des cartes flexibles se présentant avantageusement sous la forme d'un film mince de 20 µm et 250 µm d'épaisseur, réalisée dans un matériau généralement utilisé pour la fabrication de circuit imprimé souple tel que : polyimide, polyépoxyde, polyester, résine époxy renforcée de fibre de verre, substrat d'aluminium. Ces cartes 810, 820, 830 peuvent toutefois être rigides dans le cas où une flexibilité de la bande 1 n'est pas recherchée.

Selon un autre mode de réalisation, le ou les panneaux solaires 81, la ou les batteries électriques flexibles 82, le module de communication sans fil 83 et les liaisons électriques souples 3 forment un circuit imprimé flex-rigide. Les cartes 810, 820, 830 sont les portions de circuit rigides et les liaisons électriques souples 3 sont les portions de circuit flexibles.

Selon une variante de réalisation, le ou les panneaux solaires 81, la ou les batteries électriques flexibles 82, et le module de communication sans fil 83 sont connectés sur une seule carte commune flexible ou rigide de sorte qu'il n'est pas besoin de prévoir les liaisons électriques 3. Une carte flexible commune est du type précité.

Selon un mode de réalisation, l'unité 8 est connectée à la bande 1 au moyen d'un connecteur 80 qui se connecte sur le connecteur 5 de ladite bande. Ce connecteur 80 peut être relié à l'une des cartes 810, 820, 830 au moyen d'une liaison électrique souple 3 du type précité ou être directement fixé sur l'une desdites cartes.

Selon un autre mode de réalisation, l'unité 8 fait partie intégrante de la bande 1, auquel cas l'une des cartes 810, 820, 830 (la carte 810 sur la figure 5) est directement relié à la carte 23ₙ des figures 2 et 3 par une liaison électrique souple 3 du type précité. En particulier, l'ensemble peut former un circuit imprimé flex-rigide sans discontinuité, tel que décrit précédemment. Le connecteur 5 n'est alors plus nécessaire. L'ensemble des éléments peut encore être fixé sur une carte flexible ou rigide commune.

Selon un autre mode de réalisation, tous ou partie des éléments 81, 82 et/ou 83 de l'unité 8 sont directement intégrés dans les cartes d'interface 43₁-43ₙ illustrées sur la figure 3 ou dans les cartes 23₁-23ₙ de la figure 2. En particulier, chaque capteur 21-2n peut être associé à son propre dispositif d'alimentation électrique 81, 82 et/ou à son propre module de communication sans fil 83.

Lorsque chaque capteur 2₁-2ₙ est associé à son propre module de communication sans fil, lesdits capteurs peuvent être agencés en réseau de manière à communiquer pour véhiculer leurs signaux de mesure entre eux. Cette communication peut se faire de proche en proche jusqu'à un des modules de communication maitre, adapté pour collecter tous les signaux de mesure et les transmettre à l'unité de traitement 6 via la liaison sans fil Lcp. Il n'est alors plus nécessaire de prévoir des liaisons électriques 3₁-3ₙ pour connecter les capteurs 2₁-2ₙ entre eux.

### Procédé de fabrication

L'ensemble des composants électroniques qui forment le dispositif de mesure, et notamment ceux de la bande 1, sont protégés de l'environnement (chocs, eau, poussières, ...) par un ou plusieurs matériaux élastomères thermoplastiques souples déposés par impression 3D.

Sur la figure 2, les capteurs 2₁-2ₙ et leur carte de circuit imprimé respective 23₁-23ₙ sont enrobés dans un matériau thermoplastique 9. Le cas échéant et lorsqu'il est présent, le connecteur 5 est également enrobé à l'exception de sa face de connexion 50 qui débouche sur un bord de la bande 1. Sur la figure 3, les unités de gestion 4₁-4ₙ et leur carte d'interface 43₁-43ₙ respective sont également enrobées dans le matériau thermoplastique 9. Sur la figure 5, les différents éléments 81, 810, 82, 820, 8200, 83, 830 du module 8 peuvent également être enrobés dans le matériau 9.

Selon un mode préféré de réalisation, le matériau 9 est un élastomère thermoplastique souple, ou TPE, appelé également caoutchouc thermoplastique. Il peut être translucide, transparent ou opaque. On utilise préférentiellement un TPE-E ou TPC (copolyester thermoplastique - ou copolymère bloc éther-ester) qui présente une bonne résistance et peut être utilisé sur une large plage de températures. D'autres matériaux élastomère thermoplastique peuvent être utilisés, par exemple le poly(styrène-butadiène-styrène), ou SBS. D'autres matériaux thermoplastiques peuvent également être utilisés, notamment lorsqu'une flexibilité de la bande 1, tels que des matériaux à base de polymères ou copolymères du type ABS (Acrylonitrile Butadiène Styrène), ASA (Acrylonitrile Styrène Acrylate) ou SMMA (Styrene Methyl Methacrylate), pour leur bonne résistance aux chocs et au vieillissement. Quel que soit le matériau thermoplastique utilisé, il peut être mélangé à des colorants et/ou des adjuvants, par exemple pour améliorer la résistance au vieillissement et/ou aux UV.

Pour déposer le matériau 9 par impression 3D, une extrudeuse le chauffe à une température variant de 150°C à 260°C suivant la température de plasticité du matériau utilisé. Un cordon sort de l'extrudeuse. Il est avantageux de régler la température de chauffage de manière à ce que le cordon soit extrudé dans un état pâteux.

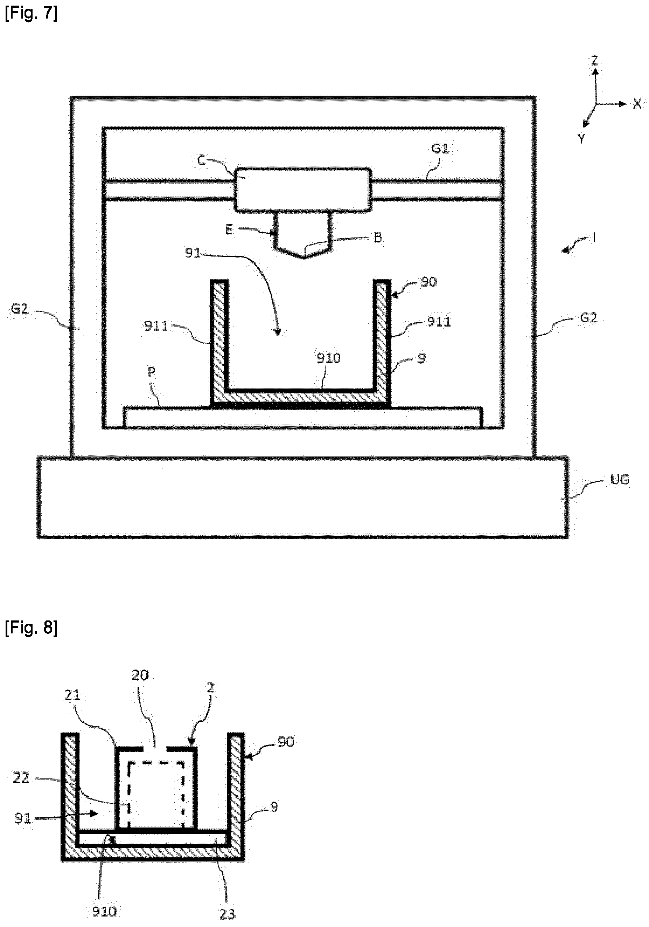

La figure 7 illustre un exemple d'imprimante 3D, référencée I, pouvant être utilisée pour la mise en œuvre du procédé de fabrication. L'extrudeuse E est solidarisée à un chariot C qui est mobile selon les axes X, Y et Z d'un repère cartésien ou repère orthonormé. Le chariot C est par exemple monté mobile sur des glissières - ou rail - G1 d'axe X et Y. Un mécanisme d'entrainement, par exemple du type à crémaillère ou à vérin, piloté par une unité de gestion UG, permet de translater le chariot C sur ces glissières G1. On peut ainsi déplacer longitudinalement et transversalement l'extrudeuse E par rapport à la surface d'un plateau P. Selon une variante de réalisation, c'est le plateau P qui est monté mobile sur des glissières d'axe X et Y (et éventuellement Z). Le déplacement vertical de l'extrudeuse E (selon l'axe Z) est rendu possible en montant les glissières G1 mobiles en translation sur des guides verticaux G2. Un mécanisme d'entrainement, par exemple du type à crémaillère ou à vérin, piloté par l'unité de gestion UG précitée, permet de translater le chariot C le long des guides verticaux G2. La buse de sortie B de l'extrudeuse E reste orientée verticalement, pour garder la direction d'extrusion perpendiculaire à la surface du plateau P.

L'unité de gestion UG se présente par exemple sous la forme d'un ordinateur portable ou fixe, pourvu notamment d'un processeur, microprocesseur ou CPU (pour Central Processing Unit) et d'une mémoire, dans laquelle est enregistré un logiciel dont les instructions, lorsqu'elles sont exécutées par le processeur, microprocesseur ou CPU, permettent de commander le déplacement de l'extrudeuse E dans l'espace. Le terme « logiciel » peut être compris comme : application informatique, programmes informatiques ou software. Par souci de clarté, il faut comprendre au sens de l'invention que « l'imprimante I fait quelque chose » signifie « le logiciel exécuté par le processeur, microprocesseur ou CPU de l'unité de gestion électronique UG fait quelque chose ».

Le déplacement de l'extrudeuse E ( et/ou du plateau P le cas échéant) selon une trajectoire prédéfinie permet de fabriquer une structure en trois dimensions par ajout de matière (fabrication additive), et plus particulièrement par un ou plusieurs cordons de matière thermoplastique extrudée qui s'empilent en couches. Ces couches peuvent être empilées les unes au-dessus des autres et/ou les unes à côté des autres. Cet empilement crée le volume de la structure. La trajectoire de l'extrudeuse E selon les axes X et Y et Z, permet de réaliser des contours courbes, comme expliqué plus avant dans la description.

En se rapportant à la figure 7, on réalise, par impression 3D du matériau 9, un support allongé 90. Ce support 90 est également visible sur les figures 3 et 4, et forme la base de la bande 1. La longueur et la largeur du support 90 correspondent donc à celles de la bande 1.

Dans ce support 90 est aménagée une rainure longitudinale 91. Par « longitudinale » on entend qu'elle est réalisée dans le sens de la longueur du support 90. La rainure 91 peut déboucher aux deux extrémités du support 90, ou seulement à l'une desdites extrémités, notamment pour faire sortir la face de connexion 50 du connecteur 5 lorsque celui-ci est prévu.

La rainure 91 présente une paroi de fond 910 et deux parois latérales 911. Sur la figure 7, la paroi de fond 910 est horizontale, les parois latérales 911 verticales, et le support 90 a une section sensiblement en U. L'épaisseur des parois 910, 911 est par exemple comprise entre 0,2 mm et 0,3 mm. La profondeur de la rainure 90 est par exemple de 2 mm. La trajectoire de l'extrudeuse E permet de conformer cette rainure 91 aux dimensions et formes souhaitées.

En se rapportant à la figure 8, lorsque le support 90 est réalisé, les capteurs 2 sont installés dans la rainure 90. Dans le mode de réalisation de la figure 2, les capteurs 2₁-2ₙ et leur carte de circuit imprimé respective 23₁-23ₙ sont installés dans la rainure 91. Dans le mode de réalisation de la figure 2, les unités de gestion 4₁-4ₙ et leur carte d'interface 43₁-43ₙ sont également installées dans la rainure 91. Sur la figure 5, les différents éléments 81, 810, 82, 820, 8200, 83, 830 du module 8 peuvent également être installés dans cette même rainure 91, le support 90 étant commun au système de capteur et audit module.

Comme illustré sur la figure 8, l'installation des capteurs 2 dans la rainure 91 est réalisée de sorte que leur zone active 20 soit située à l'opposé de la paroi de fond 910. En d'autres termes, les zones actives 20 sont orientées vers l'ouverture de la rainure 91. Les cartes 23 sont installées contre la paroi de fond 910.

L'insertion des capteurs 2₁-2ₙ dans la rainure 91 (et des autres composants électroniques associés) peut être réalisée manuellement ou de manière automatisée, par exemple au moyen d'un robot. Cette insertion peut notamment être réalisée très simplement, en une seule étape automatisable, dans le cas d'un circuit flex-rigide ou d'une carte à circuit imprimé commune. Comme expliqué plus avant dans la description, l'insertion des capteurs 2₁-2ₙ est préférentiellement réalisée en maintenant le support 90 en position sur le plateau P de l'imprimante I, de manière à conserver la position dudit support dans le référentiel X, Y, Y.

Comme également expliqué plus avant dans la description, il est avantageux de repérer la position des capteurs 2₁-2ₙ, et plus particulièrement de leur zone active 20₁-20ₙ, dans le référentiel X, Y, Y de l'imprimante I. Il convient dans ce cas d'installer les capteurs 2₁-2ₙ de manière très précise dans la rainure 91. Pour cela, et comme visible sur les figures 2 et3, au moins un premier détrompeur 230₁-230ₙ est aménagé sur chaque carte de circuit imprimé 23₁-23ₙ. Selon un mode de réalisation, les premiers détrompeurs 230₁-230ₙ consistent en une encoche aménagée sur chaque bord latéral des cartes 23₁-23ₙ. Selon une variante de réalisation, les premiers détrompeurs 230₁-230ₙ sont formés par les rebords latéraux des cartes 23₁-23ₙ de sorte qu'il n'est pas nécessaire de prévoir d'encoches. De seconds détrompeurs 910₁-910ₙ sont aménagés dans la rainure 91. Ces seconds détrompeurs 910₁-910ₙ sont configurés pour coopérer avec les premiers détrompeurs 230₁-230ₙ afin d'assurer le positionnement des capteurs 2₁-2ₙ dans la rainure 91. La rainure 91 n'a donc pas nécessairement une section constante sur toute sa longueur.

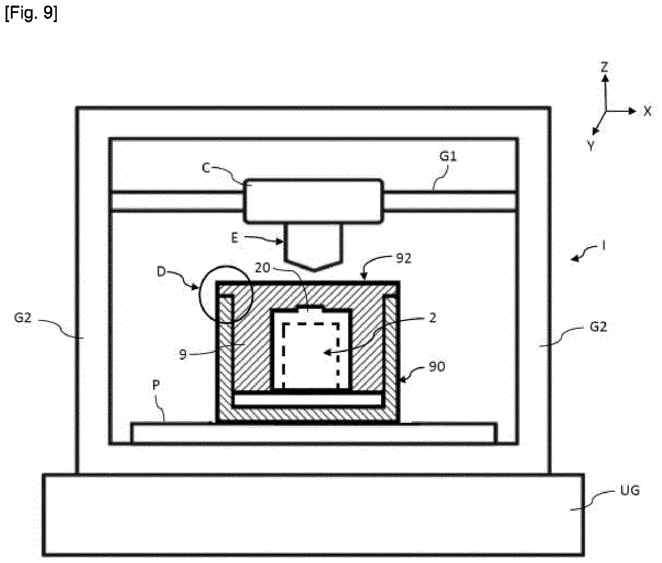

En se rapportant à la figure 9, les capteurs 2 sont ensuite encapsulés dans la rainure 91 au moyen d'un matériau thermoplastique 9 ajouté par impression 3D, au travers de l'extrudeuse E. Cette encapsulation 92 vise à remplir la rainure 91 de matériau 9. L'impression 3D permet d'encapsuler l'ensemble des composants en garantissant une très bonne qualité de protection (pas de bulle d'air), ce qui est difficile d'obtenir avec un procédé classique par coulée d'un élastomère liquide dans un moule.

Sur la figure 9, les capteurs 2 sont totalement encapsulés, leur zone active 20 étant recouverte d'une ou plusieurs couches de matériau 9. Toutefois, connaissant la position précise des capteurs 2 dans le référentiel X, Y, Z de l'imprimante I, la trajectoire de l'extrudeuse E peut être programmée pour ménager des ouvertures dans l'encapsulation 92, de sorte que les zones actives 20 des capteurs 2 soient laissées libres. En d'autres termes, l'extrudeuse E est pilotée de manière à ne pas déposer de matériau 9 sur les zones actives 20.

Pour simplifier la conception et diminuer les coûts de fabrication, ce matériau peut être le même que celui utilisé pour réaliser le support 90. Selon une variante de réalisation, il s'agit de deux matériaux distincts. On peut notamment utiliser un matériau opaque pour le support 90 et un matériau transparent pour l'encapsulation 92 (ou inversement). On peut également utiliser un matériau ayant un traitement spécifique pour l'encapsulation 92, par exemple un traitement le rendant davantage résistant aux UV. On peut encore utiliser des matériaux ayant des élasticités distinctes.

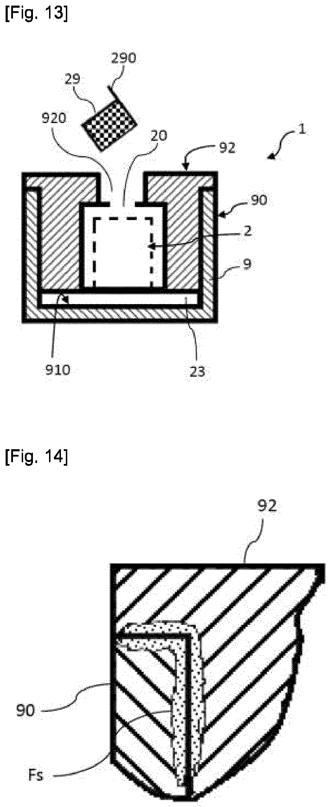

Selon un mode de réalisation, les matériaux utilisés pour l'impression 3D du support 90 et de l'encapsulation 92, ont des températures de fusion équivalentes ou sensiblement équivalentes pour permettre une fusion superficielle dudit support lors de l'impression 3D de ladite encapsulation. Cette fusion superficielle Fs est illustrée sur la figure14 et permet d'obtenir une liaison intime entre les matériaux du support 90 et de l'encapsulation 92. Cette liaison intime assure notamment à la bande 1 une grande robustesse.

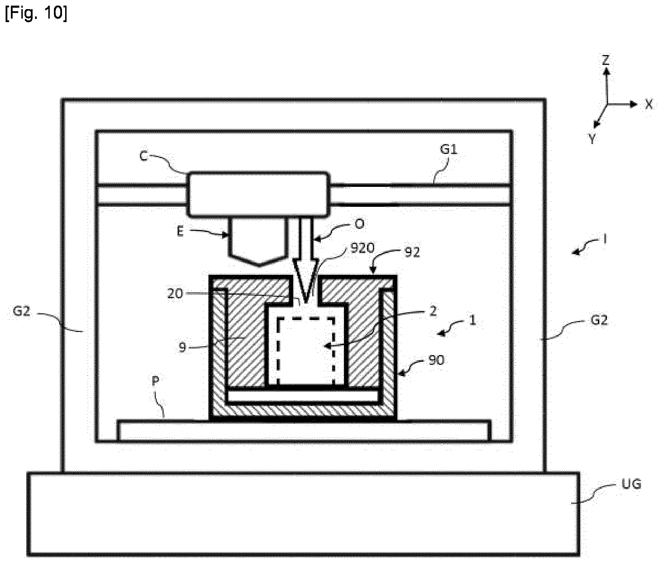

En se rapportant à la figure 10, lorsque les zones actives 20 sont recouvertes d'une ou plusieurs couches de matériau 9 après l'étape d'encapsulation, il convient de dégager lesdites zones actives pour assurer de bonnes prises de mesure. Pour ce faire, des ouvertures 920 sont ménagées dans l'encapsulation 92, au niveau de chaque zone active 20, de manière à laisser libres lesdites zones. Ces ouvertures 920 peuvent être réalisées en enlevant la matière recouvrant les zones actives 20, par exemple au moyen d'un outil O de type fraise.

L'outil O utilisé pour ménager les ouvertures 920 est préférentiellement solidarisé au chariot C portant l'extrudeuse E. En effet, connaissant la position précise des capteurs 2 et de leur zone active 20 dans le référentiel X, Y, Z de l'imprimante I, la trajectoire du chariot C peut être programmée pour positionner précisément l'outil O en vis-à-vis de chaque zone active 20. Connaissant également avec précision l'épaisseur de matériau 9 recouvrant ces zones 20, le chariot C peut être déplacé selon l'axe Z pour que l'outil O enlève juste cette couche sans attaquer l'enveloppe du capteur 2.

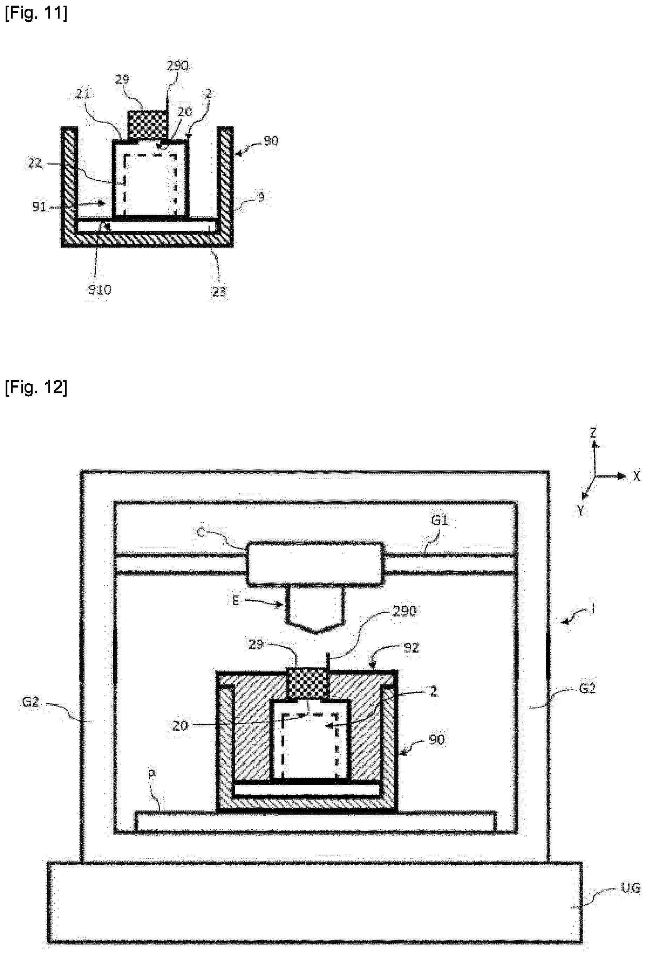

Dans le mode de réalisation des figures 11 à 13, chaque zone active 20 est préalablement protégée par un élément de protection amovible 29 (figure 11). La mise en place des éléments de protection 29 peut être réalisée avant ou après l'installation des capteurs 2 dans la rainure 91 du support 90. Selon un mode de réalisation, cet élément 29 se présente sous la forme d'une pastille, par exemple en métal, venant recouvrir la zone active 20. L'élément de protection amovible 29 comprend préférentiellement une partie préhensible 290, qui se présente par exemple sous la forme d'une languette. Sur la figure 12, l'encapsulation 92 est réalisée en déposant le matériau 9 dans la rainure 91 et autour de l'élément de protection 29. Ce dernier peut même être recouvert de matériau 9 dans la mesure où sa partie préhensible 290 reste accessible. Après l'étape d'encapsulation (figure 13), l'élément de protection 29 est retiré, notamment par préhension de sa partie 290. L'empreinte laissée dans l'encapsulation 92 par l'élément de protection 29 forme une ouverture 920 laissant libre la zone active 20.

Quel que soit le mode de réalisation, lorsque l'encapsulation 92 est réalisée et que les ouvertures 920 sont ménagées, la bande 1 est prête à être utilisée. La bande 1 peut alors être fixée sur la surface S, par exemple par collage.

Le procédé de fabrication du support 90 et de l'encapsulation qui vient d'être décrit s'applique également au module 8 lorsque celui-ci n'est pas intégré directement dans la bande 1.

Les différentes méthodes de réalisation des ouvertures 920 décrites précédemment, peuvent en outre être mises en œuvre pour ménager des ouvertures - ou fenêtres - laissant libres les cellules photovoltaïques des panneaux 81.

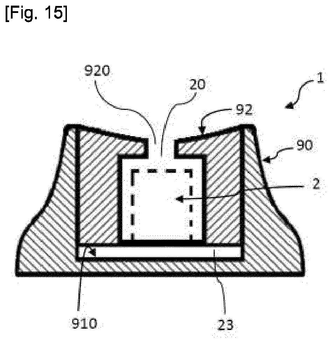

En tout état de cause, le profil de la bande 1 schématisé sur les figures 10 et 13 est simplement illustratif. Ce profil peut avoir une forme aérodynamique pour perturber au minimum l'écoulement F sur la surface S testée. En se rapportant à la figure 15, le support 90 et/ou la surface supérieure de l'encapsulation 92 peuvent notamment avoir des profils incurvés. Afin de minimiser les perturbations induites par la bande 1, sa forme et/ou son profil peuvent être préalablement évalués et testés à l'aide de logiciels de simulation (par exemple des logiciels de mécanique des fluides numérique). La forme et/ou le profil de la bande 1 peuvent alors être optimisés afin de réduire au maximum les perturbations engendrées sur les mesures. Lorsque la forme et/ou le profil de la bande 1 sont validés par un logiciel de simulation, l'unité de gestion UG de l'imprimante I est programmée pour que le support 90 et l'encapsulation 92 soient imprimés pour obtenir la bande testée par simulation.

L'agencement des différents éléments et/ou moyens et/ou étapes de l'invention, dans les modes de réalisation décrits ci-dessus, ne doit pas être compris comme exigeant un tel agencement dans toutes les implémentations. Diverses variantes peuvent être prévues, et notamment:
- La zone active du capteur 2 peut se présenter sous une autre forme que l'orifice 20. Il peut par exemple consister en une membrane, un élément piézoélectrique, un élément résistif, ou autre, agencé sur la face supérieure du capteur 2, notamment sur la face supérieure de l'enveloppe 21.
- Les liaisons électriques souples 3₁-3ₙ peuvent se présenter sous la forme de bus CAN (pour l'acronyme anglais Controller Area Network), de bus SPI (pour l'acronyme anglais Serial Peripheral Interface), etc.
- L'unité 8 peut ne comporter qu'un ou plusieurs panneaux solaires 81 et/ou qu'une ou plusieurs batteries électriques flexibles 82 et/ou qu'un module de communication sans fil 83.
- L'unité 8 peut comprendre une ou plusieurs batteries électriques 82 qui ne sont pas flexibles, mais rigides.
- L'impression 3D du matériau élastomère thermoplastique peut être réalisée en solidarisant l'extrudeuse E à un autre moyen de déplacement, par exemple un bras de manipulation robotisé à 3 axes ou à 6 axes.
- Les ouvertures 920 peuvent être réalisées par retrait de matière, par exemple en chauffant localement l'encapsulation 92 au niveau des zones actives 20, et en dégageant la couche de matériau 9 qui recouvre lesdites zones.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation.

## Revendications

1. Procédé de fabrication d'un dispositif de mesure se présentant sous la forme d'une bande (1) intégrant des capteurs de mesure (2, 2₁-2ₙ) d'une ou plusieurs grandeurs physiques pariétales, ledit procédé comprenant une étape consistant à utiliser des capteurs (2, 2₁-2ₙ) présentant une zone active (20, 20₁-20ₙ) pour la prise de mesure,
**caractérisé en ce que** le procédé comprend les étapes consistant à :
- réaliser, par impression 3D d'un matériau thermoplastique (9), un support allongé (90) comprenant une rainure longitudinale (91), laquelle rainure présente une paroi de fond (910),
- installer les capteurs (2, 2₁-2ₙ) dans la rainure (91), l'installation étant réalisée de sorte que les zones actives (20, 20₁-20ₙ) desdits capteurs soient situées à l'opposé de la paroi de fond (910),
- encapsuler les capteurs (2, 2₁-2ₙ) dans la rainure (91), au moyen d'un matériau thermoplastique (9) ajouté par impression 3D,
- ménager des ouvertures (920) dans l'encapsulation (92), au niveau de chaque zone active (20, 20₁-20ₙ) des capteurs (2, 2₁-2ₙ), de manière à laisser libres lesdites zones.

2. Procédé selon la revendication 1, consistant à ménager les ouvertures pendant l'impression 3D de l'encapsulation (92).

3. Procédé selon la revendication 1, comprenant les étapes consistant à :
- réaliser l'encapsulation (92) des capteurs (2, 2₁-2ₙ) de manière à recouvrir leur zone active (20, 20₁-20ₙ) d'une ou plusieurs couches de matériau thermoplastique (9),
- ménager les ouvertures (920), par enlèvement ou retrait de matière recouvrant les zones actives (20, 20₁-20ₙ).

4. Procédé selon la revendication 1, comprenant les étapes suivantes :
- protéger chaque zone active (20, 20₁-20ₙ) par un élément de protection amovible (29), laquelle étape est réalisée avant l'encapsulation (92) des capteurs (2, 2₁-2ₙ),
- après l'encapsulation (92) des capteurs (2, 2₁-2ₙ), retirer les éléments de protection amovible (29) de sorte que les empreintes laissées dans l'encapsulation (92) par lesdits éléments de protection forment les ouvertures (920).

5. Procédé selon l'une des revendications précédentes, consistant à utiliser le même matériau thermoplastique (9) pour l'impression 3D du support (90) et pour l'impression 3D de l'encapsulation (92).

6. Procédé selon l'une des revendications 1 à 4, consistant à utiliser un premier matériau thermoplastique (9) pour l'impression 3D du support (90) et un second matériau thermoplastique (9) pour l'impression 3D de l'encapsulation (92), le second matériau ayant une température de fusion équivalente ou sensiblement équivalente à celle du premier matériau pour permettre une fusion superficielle dudit support lors de l'impression 3D de ladite encapsulation.

7. Procédé selon l'une des revendications précédentes, comprenant les étapes consistant à :
- fixer chaque capteur (2, 2₁-2ₙ) sur une carte de circuit imprimé (23, 23₁-23ₙ),
- aménager au moins un premier détrompeur (230₁-230ₙ) sur chaque carte de circuit imprimé (23₁-23ₙ),
- aménager de seconds détrompeurs (910₁-910ₙ) dans la rainure (91), lesquels seconds détrompeurs sont configurés pour coopérer avec les premiers détrompeurs (230₁-230ₙ) pour assurer le positionnement des capteurs (2, 2₁-2ₙ) dans ladite rainure.

8. Dispositif de mesure se présentant sous la forme d'une bande (1) intégrant des capteurs de mesure (2, 2₁-2ₙ) d'une ou plusieurs grandeurs physiques pariétales, lesdits capteurs présentant une zone active (20, 20₁-20ₙ) pour la prise de mesure,
**caractérisé en ce que** :
- le dispositif de mesure comprend un support allongé (90) réalisé dans un matériau thermoplastique (9), lequel support est susceptible d'être obtenu par impression 3D dudit matériau, lequel support comprend une rainure longitudinale (91) présentant une paroi de fond (910),
- les capteurs (2, 2₁-2ₙ) sont installés dans la rainure (91) sorte que les zones actives (20, 20₁-20ₙ) desdits capteurs soient situées à l'opposé de la paroi de fond (910),
- les capteurs (2, 2₁-2ₙ) sont encapsulés dans la rainure (91), au moyen d'un matériau thermoplastique (9), lequel matériau est susceptible d'être ajouté par impression 3D,
- des ouvertures (920) sont ménagées dans l'encapsulation (92), au niveau de chaque zone active (20, 20₁-20ₙ) des capteurs (2, 2₁-2ₙ), de sorte que lesdites zones sont laissées libres.

9. Dispositif de mesure selon la revendication 8, dans lequel chaque capteur (2₁-2ₙ) est connecté à une unité de gestion électronique (4₁-4ₙ) respective, chaque unité de gestion électronique étant adaptée pour assurer au moins l'une des fonctions suivantes :
- réguler une tension d'alimentation du capteur respectif (2₁-2ₙ),
- amplifier un signal de mesure du capteur respectif (2₁-2ₙ),
- adresser le capteur respectif (2₁-2ₙ),
- numériser les signaux de mesure générés par le capteur respectif (2₁-2ₙ).

10. Dispositif de mesure selon la revendication 9, dans lequel :
- chaque unité de gestion électronique (4₁-4ₙ) se présente sous la forme d'une carte d'interface (43₁-43ₙ),
- chaque capteur (2₁-2ₙ) est fixé sur une carte de circuit imprimé (23₁-23ₙ) qui est distincte de la carte d'interface (43₁-43ₙ) associée audit capteur,
- chaque carte de circuit imprimé (23₁-23ₙ) est connectée à une carte d'interface respective (43₁-43ₙ) au moyen d'une liaison électrique souple (3₁-3n),
- le dispositif présente, installée dans la rainure (91), une succession de cartes de circuit imprimé (23₁-23ₙ) et de cartes d'interface (43₁-43ₙ), connectées par des liaisons électriques souples (3₁-3ₙ).

11. Dispositif de mesure selon la revendication 10, dans lequel les liaisons électriques souples (3₁-3ₙ) sont des bus I2C.

12. Dispositif de mesure selon l'une des revendications 8 à 11, dans lequel les capteurs (2₁-2ₙ) sont installés sur des portions de circuit rigides (23, 23₁-23ₙ) d'un circuit imprimé flex-rigide.

13. Dispositif de mesure selon l'une des revendications 8 ou 9, les capteurs (2₁-2ₙ) sont fixés sur une carte de circuit imprimé commune, laquelle carte est flexible ou rigide.

14. Dispositif de mesure selon la revendication 9, dans lequel les capteurs (2₁-2ₙ) et les unités de gestion électronique (4₁-4ₙ) sont fixés sur une carte de circuit imprimé commune, laquelle carte est flexible ou rigide.

15. Dispositif de mesure selon l'une des revendications 8 à 14, dans lequel les capteurs (2₁-2ₙ) sont des micro-capteurs MEMS.

16. Dispositif de mesure selon l'une des revendications 8 à 15, dans lequel la bande (1) intègre au moins un module de communication sans fil (83) adapté pour recevoir les signaux de mesures générés par les capteurs (2₁-2ₙ) et transmettre lesdits signaux au travers d'une liaison sans fil de courte portée (Lcp).

17. Dispositif de mesure selon l'une des revendications 8 à 16, dans lequel chaque capteur (2₁-2ₙ) est associé à un module de communication sans fil qui lui est propre, lesdits capteurs étant agencés en réseau de manière à communiquer pour véhiculer leurs signaux de mesure entre eux.

18. Dispositif de mesure selon l'une des revendications 8 à 16, comportant une unité d'alimentation électrique autonome (8), laquelle unité est adaptée pour alimenter ledit dispositif de mesure.

19. Dispositif de mesure selon la revendication 18, dans lequel l'unité d'alimentation (8) comporte au moins l'un des éléments suivants :
- un ou plusieurs films photovoltaïques flexibles (81),
- une ou plusieurs batteries électriques (82),
- un module de communication sans fil (83) adapté pour recevoir les signaux de mesures générés par les capteurs (2₁-2ₙ) et transmettre lesdits signaux à une unité de traitement (6), via une liaison sans fil de courte portée (Lcp).

## Patentansprüche

1. Verfahren zum Herstellen einer Messvorrichtung in Form eines Streifens (1), der Messsensoren (2, 2₁-2ₙ) einer oder mehrerer parietaler physikalischer Größen enthält, wobei das Verfahren einen Schritt umfasst, der darin besteht, Sensoren (2, 2₁ -2ₙ) mit einer aktiven Zone (20, 20₁-20ₙ) zur Messung zu verwenden,
**dadurch gekennzeichnet, dass** das Verfahren die folgenden Schritte umfasst, bestehend aus:
- Herstellen eines länglichen Trägers (90), der eine Längsnut (91) umfasst, wobei die Nut eine Bodenwand (910) aufweist, durch 3D-Druck eines thermoplastischen Materials (9),
- Anbringen der Sensoren (2, 2₁-2ₙ) in die Nut (91), wobei das Anbringen derart erfolgt, dass die aktiven Zonen (20, 20₁-20ₙ) der Sensoren sich gegenüber der Bodenwand (910) befinden,
- Einkapseln der Sensoren (2, 2₁-2ₙ) in der Nut (91) mittels eines durch 3D-Druck hinzugefügten thermoplastischen Materials (9),
- Vorsehen von Öffnungen (920) in der Einkapselung (92) auf Höhe jeder aktiven Zone (20, 20₁-20ₙ) der Sensoren (2, 2₁-2ₙ), derart, dass diese Zonen frei bleiben.

2. Verfahren nach Anspruch 1, das darin besteht, die Öffnungen während des 3D-Druckens der Einkapselung (92) vorzusehen.

3. Verfahren nach Anspruch 1, das die folgenden Schritte umfasst, bestehend aus:
- Herstellen der Einkapselung (92) der Sensoren (2, 2₁-2ₙ) derart, dass ihre aktive Zone (20, 20₁-20ₙ) mit einer oder mehreren Schichten aus thermoplastischem Material (9) bedeckt ist,
- Vorsehen der Öffnungen (920) durch Abtragen oder Entfernen von Material, das die aktiven Zonen (20, 20₁-20ₙ) bedeckt.

4. Verfahren nach Anspruch 1, das die folgenden Schritte umfasst:
- Schützen jeder aktiven Zone (20, 20₁-20ₙ) durch ein entfernbares Schutzelement (29), wobei dieser Schritt vor der Einkapselung (92) der Sensoren (2, 2₁-2ₙ) durchgeführt wird,
- Abnehmen der entfernbaren Schutzelemente (29) nach der Einkapselung (92) der Sensoren (2, 2₁-2ₙ), sodass die von den Schutzelementen in der Einkapselung (92) hinterlassenen Abdrücke die Öffnungen (920) bilden.

5. Verfahren nach einem der vorhergehenden Ansprüche, das darin besteht, das gleiche thermoplastische Material (9) für den 3D-Druck des Trägers (90) und für den 3D-Druck der Einkapselung (92) zu verwenden.

6. Verfahren nach einem der Ansprüche 1 bis 4, das darin besteht, ein erstes thermoplastisches Material (9) für den 3D-Druck des Trägers (90) und ein zweites thermoplastisches Material (9) für den 3D-Druck der Einkapselung (92) zu verwenden, wobei das zweite Material eine Schmelztemperatur aufweist, die äquivalent oder im Wesentlichen äquivalent zu der des ersten Materials ist, um ein Oberflächenschmelzen des Trägers während des 3D-Druckens der Einkapselung zu ermöglichen.

7. Verfahren nach einem der vorhergehenden Ansprüche, das die Schritte umfasst, bestehend aus:
- Fixieren jedes Sensors (2, 2₁-2ₙ) auf einer Leiterplatte (23, 23₁-23ₙ),-Anordnen mindestens eines ersten Polarisators (230₁-230ₙ) auf jeder Leiterplatte (23₁-23ₙ),
- Anordnen von zweiten Polarisatoren (910₁-910ₙ) in der Nut (91), wobei die zweiten Polarisatoren so konfiguriert sind, dass sie mit den ersten Polarisatoren (230₁-230ₙ) zusammenwirken, um die Positionierung der Sensoren (2, 2₁-2ₙ) in der Nut sicherzustellen.

8. Messvorrichtung in Form eines Streifens (1), der Messsensoren (2, 2₁-2ₙ) einer oder mehrerer parietaler physikalischer Größen enthält, wobei die Sensoren eine aktive Zone (20, 20₁-20ₙ) für die Messung aufweisen,
**dadurch gekennzeichnet, dass:**
- die Messvorrichtung einen länglichen Träger (90) aus einem thermoplastischen Material (9) umfasst, wobei der Träger durch 3D-Druck des Materials erhalten werden kann, wobei der Träger eine Längsnut (91) mit einer Bodenwand (910) umfasst,
- die Sensoren (2, 2₁-2ₙ) derart in der Nut (91) angebracht sind, dass die aktiven Zonen (20, 20₁-20ₙ) der Sensoren gegenüber der Bodenwand (910) angeordnet sind,
- die Sensoren (2, 2₁-2ₙ) in der Nut (91) mittels eines thermoplastischen Materials (9) eingekapselt sind, wobei das Material durch 3D-Druck hinzugefügt werden kann,
- Öffnungen (920) in der Einkapselung (92) auf Höhe jeder aktiven Zone (20, 20₁-20ₙ) der Sensoren (2, 2₁-2ₙ) vorgesehen sind, sodass diese Zonen frei bleiben.

9. Messvorrichtung nach Anspruch 8, bei der jeder Sensor (2₁-2ₙ) mit einer jeweiligen elektronischen Verwaltungseinheit (4₁-4ₙ) verbunden ist, wobei jede elektronische Verwaltungseinheit angepasst ist, mindestens eine der folgenden Funktionen sicherzustellen:
- Regeln einer Versorgungsspannung des jeweiligen Sensors (2₁-2ₙ),
- Verstärken eines Messsignals des jeweiligen Sensors (2₁-2ₙ),
- Ansprechen des jeweiligen Sensors (2₁-2ₙ),
- Digitalisieren der vom jeweiligen Sensor (2₁-2ₙ) erzeugten Messsignale.

10. Messvorrichtung nach Anspruch 9, bei der:
- jede elektronische Verwaltungseinheit (4₁-4ₙ) in Form einer Schnittstellenkarte (43₁-43ₙ) vorliegt,
- jeder Sensor (2₁-2ₙ) auf einer Leiterplatte (23₁-23ₙ) befestigt ist, die von der dem Sensor zugeordneten Schnittstellenkarte (43₁-43ₙ) getrennt ist,
- jede Leiterplatte (23₁-23ₙ) mit einer jeweiligen Schnittstellenkarte (43₁-43ₙ) mittels einer flexiblen elektrischen Verbindung (3₁3ₙ) verbunden ist,
- die Vorrichtung eine in der Nut (91) angebrachte Folge von Leiterplatten (23₁-23ₙ) und Schnittstellenkarten (43₁-43ₙ) aufweist, die durch flexible elektrische Verbindungen (3₁-3ₙ) verbunden sind.

11. Messvorrichtung nach Anspruch 10, bei der die flexiblen elektrischen Verbindungen (3₁-3ₙ) I2C-Busse sind.

12. Messvorrichtung nach einem der Ansprüche 8 bis 11, bei der die Sensoren (2₁-2ₙ) auf starren Schaltungsteilen (23, 23₁-23ₙ) einer Starrflex-Leiterplatte angebracht sind.

13. Messvorrichtung nach einem der Ansprüche 8 oder 9, wobei die Sensoren (2₁-2ₙ) auf einer gemeinsamen Leiterplatte befestigt sind, wobei die Leiterplatte flexibel oder starr ist.

14. Messvorrichtung nach Anspruch 9, wobei die Sensoren (2₁-2ₙ) und die elektronischen Verwaltungseinheiten (4₁-4ₙ) auf einer gemeinsamen Leiterplatte befestigt sind, wobei die Leiterplatte flexibel oder starr ist.

15. Messvorrichtung nach einem der Ansprüche 8 bis 14, wobei die Sensoren (2₁-2ₙ) MEMS-Mikrosensoren sind.

16. Messvorrichtung nach einem der Ansprüche 8 bis 15, wobei das Band (1) mindestens ein drahtloses Kommunikationsmodul (83) enthält, das ausgelegt ist, die von den Sensoren (2₁-2ₙ) erzeugten Messsignale zu empfangen und die Signale über eine drahtlose Verbindung mit kurzer Reichweite (Lep) zu übertragen.

17. Messvorrichtung nach einem der Ansprüche 8 bis 16, wobei jeder Sensor (2₁-2ₙ) mit einem eigenen drahtlosen Kommunikationsmodul verbunden ist, wobei die Sensoren in einem Netzwerk so angeordnet sind, dass sie kommunizieren, um ihre Messsignale zwischen ihnen zu transportieren.

18. Messvorrichtung nach einem der Ansprüche 8 bis 16 , umfassend eine eigenständige Stromversorgungseinheit (8), wobei die Einheit ausgelegt ist, die Messvorrichtung mit Strom zu versorgen.

19. Messvorrichtung nach Anspruch 18, bei der die Versorgungseinheit (8) mindestens eines der folgenden Elemente umfasst:
- eine oder mehrere flexible Photovoltaikfolien (81),
- eine oder mehrere elektrische Batterien (82),
- ein drahtloses Kommunikationsmodul (83), das geeignet ist, die von den Sensoren (2₁-2ₙ) erzeugten Messsignale zu empfangen und diese Signale über eine drahtlose Nahbereichsverbindung (Lcp) an eine Verarbeitungseinheit (6) zu übertragen.

## Claims

1. A method of manufacturing a measuring device in the form of a strip (1) incorporating sensors (2, 2₁-2ₙ) to measure one or more parietal physical quantities, said method comprising a step consisting of using sensors (2, 2₁-2ₙ) having an active area (20, 20₁-20ₙ) for taking measurements,
**characterised in that** the method comprises steps consisting of:
- making, by 3D printing of a thermoplastic material (9), an elongated support (90) including a longitudinal groove (91), said groove has a bottom wall (910),
- installing the sensors (2, 2₁-2ₙ) in the groove (91), the installation being carried out so that the active areas (20, 20₁-20ₙ) of said sensors are located opposite the bottom wall (910),
- encapsulating the sensors (2, 2₁-2ₙ) in the groove (91), using a thermoplastic material (9) added by 3D printing,
- creating openings (920) in the encapsulation (92) at each active area (20, 20₁-20ₙ) of the sensors (2, 2₁-2ₙ) so as to leave said areas free.

2. A method according to claim 1, consisting of creating the openings during 3D printing of the encapsulation (92).

3. Method according to claim 1, comprising steps consisting of:
- encapsulating (92) the sensors (2, 2₁-2ₙ) so as to cover their active area (20, 20₁-20ₙ) with one or more layers of thermoplastic material (9),
- creating openings (920), by removing or shrinking material covering the active areas (20, 20₁-20ₙ).

4. Method according to claim 1, comprising the following steps:
- protecting each active area (20, 20₁-20ₙ) with a removable protective element (29), which step is performed before encapsulation (92) of the sensors (2, 2₁-2ₙ),
- after encapsulation (92) of the sensors (2, 2₁-2ₙ), removing the removable protective elements (29) so that the impressions left in the encapsulation (92) by said protective elements form the openings (920).

5. A method according to any of the preceding claims, consisting of using the same thermoplastic material (9) for 3D printing the support (90) and for 3D printing the encapsulation (92).

6. Method according to any of claims 1 to 4, consisting of using a first thermoplastic material (9) for 3D printing the support (90) and a second thermoplastic material (9) for 3D printing of encapsulation (92), the second material having a melting temperature equivalent or essentially equivalent to that of the first material in order to allow surface melting of the said support when 3D printing the said encapsulation.

7. Method according to any of the preceding claims, comprising the following steps:
- attaching each sensor (2, 2₁-2ₙ) to a printed circuit board (23, 23₁-23ₙ),
- arranging at least a first locating pin (230₁-230ₙ) on each printed circuit board (23₁-23ₙ),
- arranging second locating pins (910₁-910ₙ) in the groove (91), said second locating pins are configured to combine with the first locating pins (230₁-230ₙ) to ensure positioning of the sensors (2, 2₁-2ₙ) in said groove.

8. Measuring device in the form of a strip (1) with sensors (2, 2₁-2ₙ) to measure one or more parietal physical parameters, said sensors having an active area (20, 20₁-20ₙ) for taking measurements,
**characterised in that:**
- the measuring device comprises an elongated support (90) made of a thermoplastic material (9), which support may be obtained by 3D printing of said material, which support includes a longitudinal groove (91) having a bottom wall (910),
- the sensors (2, 2₁-2ₙ) are installed in the groove (91) so that the active areas (20, 20₁-20ₙ) of said sensors are located opposite the bottom wall (910),
- the sensors (2, 2₁-2ₙ) are encapsulated in the groove (91) by means of a thermoplastic material (9), which material can be added by 3D printing,
- openings (920) are created in the encapsulation (92) at each active area (20, 20₁-20ₙ) of the sensors (2, 2₁-2ₙ) so that said areas are left free.

9. Measuring device according to claim 8, wherein each sensor (2₁-2ₙ) is connected to a respective electronic management unit (4₁-4ₙ), each electronic management unit being adapted to perform at least one of the following functions:
- regulate a supply voltage to the respective sensor (2₁-2ₙ),
- amplify a measurement signal from the respective sensor (2₁-2ₙ),
- address the respective sensor (2₁-2ₙ),
- digitise the measurement signals generated by the respective sensor (2₁-2ₙ).

10. Measuring device according to claim 9, wherein:
- each electronic management unit (4₁-4ₙ) takes the form of an interface board (43₁-43ₙ),
- each sensor (2₁-2ₙ) is attached to a printed circuit board (23₁-23ₙ) separate from the interface board (43₁-43ₙ) associated with said sensor,
- each printed circuit board (23₁-23ₙ) is connected to a respective interface board (43₁-43ₙ) by means of a flexible electrical link (3₁-3ₙ),
- the device has, installed in the groove (91), a succession of printed circuit boards (23₁-23ₙ) and interface boards (43₁-43ₙ), connected by flexible electrical links (3₁-3ₙ).

11. Measuring device according to claim 10, wherein the flexible electrical links (3₁-3ₙ). are I2C buses.

12. Measuring device according to any of claims 8 to 11, wherein the sensors (2₁-2ₙ). are installed on rigid circuit portions (23, 23₁-23ₙ). of a flex-rigid printed circuit.

13. Measuring device according to one of claims 8 or 9, the sensors (2₁-2ₙ) are fitted on a common printed circuit board, which board is flexible or rigid.

14. Measuring device according to claim 9, wherein the sensors (2₁-2ₙ) and electronic management units (4₁-4ₙ) are fitted on a common printed circuit board, which board is flexible or rigid.

15. Measuring device according to any of claims 8 to 14, wherein the sensors (2₁-2ₙ) are MEMS micro-sensors.

16. Measuring device according to any of claims 8 to 15, wherein the strip (1) includes at least one wireless communication module (83) adapted to receive the measurement signals generated by the sensors (2₁-2ₙ) and to transmit said signals via a short-range wireless link (Lcp).

17. Measuring device according to any of claims 8 to 16, wherein each sensor (2₁-2ₙ) is associated with its own wireless communication module, said sensors being networked so as to communicate to convey their measurement signals to each other.

18. Measuring device according to any of claims 8 to 16, comprising a self-contained electric power supply unit (8), which unit is adapted to power said measuring device.

19. Measuring device according to claim 18, wherein the power supply unit (8) includes at least one of the following elements:
- one or more flexible photovoltaic films (81),
- one or more electric batteries (82),
- a wireless communication module (83) adapted to receive the measurement signals generated by the sensors (2₁-2ₙ) and to transmit said signals to a processing unit (6), via a short-range wireless link (Lcp).
